# DEMANDE DE BREVET EUROPEEN

(11) **EP 0 600 797 A1**
(43) Date de publication de la demande: **08.06.1994**
(21) Numéro de dépôt: 93402922.4
(22) Date de dépôt: 02.12.1993
(51) Int. Cl.: B64C 27/50, B64C 27/32

(54) **Dispositif de verrouillage des pales du rotor d'un hélicoptère à l'encontre d'un battement**

(30) Priorité: 03.12.1992 FR 9214555
(71) Demandeur: LUCAS FRANCE S.A., F-75008 Paris (FR)
(72) Inventeur: Michel, Claude, F-78700 Conflans Sainte Honorine (FR)
(74) Mandataire: Martin, Jean-Jacques

(57) **Abrégé**

L'invention concerne un dispositif de verrouillage des pales du rotor principal d'un hélicoptère à l'encontre d'un battement.

Pour assurer le verrouillage de chaque pale (1) dans une orientation limite basse qu'elle occupe notamment lorsque le rotor est à l'arrêt, le moyeu (2) du rotor porte des organes de verrouillage (13) à raison d'un par pale (1), qu'une came unique (7), coaxiale au rotor, permet de placer dans une position de verrouillage de la pale (1) respectivement correspondante ou dans une position de déverrouillage de cette pale (1).

Un tel dispositif trouve notamment son application sur des hélicoptères destinés à être garés sous volume restreint, ce qui nécessite un repliage préalable des pales.

## Description

La présente invention concerne un dispositif de verrouillage des pales du rotor principal d'un hélicoptère à l'encontre d'un battement, ledit rotor principal présentant un axe approximativement vertical de rotation et comportant :
- un moyeu disposé suivant ledit axe de rotation, susceptible d'être entraîné ou immobilisé en rotation autour de celui-ci par rapport à la cellule de l'hélicoptère, et constituant autant d'appuis, notamment dans un sens radial centrifuge, que de pales du rotor principal, lesdits appuis étant disposés selon une répartition angulaire déterminée autour dudit axe de rotation,
- lesdites pales, disposées approximativement radialement par rapport audit axe de rotation et selon ladite répartition angulaire déterminée autour de celui-ci, chaque pale comportant une zone extrême chevauchant l'un, respectif, desdits appuis et s'appuyant sur celui-ci, notamment dans le sens radial centrifuge respectif, avec possibilité de battement, ladite zone extrême présentant vers ledit axe de rotation, respectivement de part et d'autre de l'appui respectif en référence à une direction axiale, des zones respectivement supérieure et inférieure de butée centripète,
- des contreparties respectivement supérieure et inférieure de butée centripète pour les zones respectivement supérieure et inférieure de butée centripète de chaque pale, respectivement, sur le moyeu, autorisant un battement limité de chaque pale par rapport au moyeu, entre une orientation limite basse de la pale, que la pale tend à occuper par gravité et dans laquelle la zone inférieure de butée centripète est en appui centripète sur la contrepartie inférieure de butée centripète, et une orientation limite haute, que la pale tend à occuper par réaction à la sustentation et dans laquelle la zone supérieure de butée centripète est en appui centripète sur la contrepartie supérieure de butée centripète, alors que ladite zone extrême de la pale s'appuie dans ledit sens radial centrifuge sur l'appui respectivement correspondant.

En pratique, l'appui de chaque pale sur le moyeu présente la forme d'une rotule, permettant une orientation de chaque pale par rapport au moyeu non seulement en battement, c'est-à-dire dans le sens de la hauteur, mais également en incidence et en traînée, c'est-à-dire par rapport à un plan perpendiculaire à l'axe de rotation du rotor et dans un tel plan, respectivement, avec rappel élastique de chaque pale vers une orientation privilégiée respective qui, en battement, correspond à l'orientation limite basse. A cet effet, par exemple, chaque pale s'appuie sur l'appui respectivement correspondant par l'intermédiaire d'un bloc respectif, solidaire de l'un et de l'autre et travaillant élastiquement entre eux, d'une part en compression notamment dans ledit sens radial centrifuge et d'autre part en cisaillement et en torsion lorsque la pale évolue en battement, en incidence et en traînée.

Un tel montage est bien connu, ainsi que ses avantages, mais il introduit une difficulté lorsqu'il s'agit de prévoir une possibilité de repliage des pales du rotor principal, après arrêt de celui-ci, le long de la cellule de l'hélicoptère en vue d'un garage de celui-ci sous un volume restreint, notamment sur un bâteau.

En effet, les dispositifs connus à cet effet, par exemple décrits dans la demande de brevet européen N° 0 057 053, mettent en oeuvre de simples pivots d'articulation de chaque pale sur le moyeu autour d'un axe respectif parallèle à l'axe de rotation du rotor principal, ainsi que des verrous d'immobilisation des pales à la rotation des axes en question par rapport au moyeu, dispositions difficilement transposables au cas de pales directement raccordées au moyeu avec possibilité d'orientation en incidence, en traînée et en battement par rapport à ce moyeu.

Dans un tel cas, il apparaît hautement préférable, avant d'effectuer le repliage des pales après l'arrêt du rotor principal, de verrouiller ces pales en incidence, en traînée et en battement par rapport au moyeu dudit rotor, de préférence dans ladite orientation privilégiée respective.

La présente invention s'intéresse au verrouillage en battement, c'est-à-dire au blocage du mouvement vertical des pales par rapport au moyeu.

A cet effet, la présente invention propose un dispositif appliqué à un rotor principal du type indiqué en préambule, et caractérisé en ce qu'il comporte :
- entre chaque zone supérieure de butée, en référence à l'orientation limite basse, et l'axe de rotation, un organe de verrouillage respectif monté mobile, par rapport au moyeu, entre une position de verrouillage comparativement éloignée de l'axe de rotation et dans laquelle il s'appuie contre la zone supérieure de butée alors que la pale occupe son orientation limite basse, pour verrouiller la pale dans cette orientation, et une position de déverrouillage comparativement rapprochée de l'axe de rotation et dans laquelle il dégage suffisamment la zone supérieure de butée pour autoriser un libre battement de la pale entre son orientation limite basse et son orientation limite haute,
- une came unique de commande simultanée de l'évolution des organes de verrouillage entre leurs positions respectivement de verrouillage et de déverrouillage, montée à la rotation autour dudit axe de rotation par rapport au moyeu,
- des moyens de liaison cinématique entre la came et chaque organe de verrouillage, de telle sorte que lorsque la came occupe une position angulaire déterminée de verrouillage, autour dudit axe de rotation, par rapport au moyeu, tous les organes de verrouillage occupent leur position de verrouillage et que, lorsque la came occupe une position angulaire déterminée de déverrouillage, autour dudit axe de rotation, par rapport au moyeu, tous les organes de verrouillage soient au moins libres de gagner leur position de déverrouillage,
- des moyens moteurs commandés pour provoquer une rotation de la came autour de l'axe de rotation, par rapport au moyeu, entre lesdites positions angulaires respectivement de verrouillage et de déverrouillage.

Le verrouillage en incidence et en traînée ainsi que le repliage des pales sont assurés par d'autres moyens, qui n'entrent pas dans le cadre de la présente invention.

On comprend aisément que le dispositif selon l'invention permette, de façon commandée, de placer puis de retenir coercitivement chaque pale dans une orientation déterminée en termes de battement, à savoir l'orientation limite basse, pendant les opérations de repliage, puis lors du garage de l'hélicoptère avec les pales repliées, puis lors du dépliage des pales, ce qui facilite considérablement les opérations de pliage et de dépliage et, en particulier, permet de les mécaniser en dépit du fait que les pales coopèrent avec le moyeu par l'intermédiaire d'appuis autorisant un déplacement relatif, notamment un battement.

Le fait que l'orientation dans laquelle les pales sont immobilisées soit leur orientation limite basse permet de solliciter aussi peu que possible les organes de verrouillage, la came, les moyens de liaison cinématique entre cette dernière et chaque organe de verrouillage ainsi que les moyens moteurs commandés, étant entendu qu'en principe, pendant les opérations de pliage et de dépliage comme pendant le garage avec pales repliées, les pales ne sont pas soumises à des sollicitations dans le sens d'un passage de leur orientation limite basse à leur orientation limite haute.

En outre, dans la mesure où, de façon habituelle, les pales sont régulièrement réparties angulairement autour de l'axe de rotation du rotor, les efforts subis par la came du fait de sa coopération avec chaque pale par l'intermédiaire de l'organe de verrouillage respectivement correspondant s'équilibrent sensiblement grâce au caractère unique de la came, commune à la commande du verrouillage de l'ensemble des pales, et à son montage coaxial, ce qui permet à la came de travailler dans de bonnes conditions mécaniques. En outre, le montage coaxial de la came permet d'associer à des amplitudes relativement faibles de rotation de la came autour de l'axe de rotation du rotor des amplitudes relativement importantes de déplacement des organes de verrouillage suivant des directions radiales en référence à cet axe, sans qu'il en résulte la mise en oeuvre d'efforts et par conséquent de contraintes excessifs au niveau des moyens de liaison cinématique entre la came et chaque organe de verrouillage, ce qui est également favorable d'un point de vue mécanique. On peut par conséquent attendre d'un dispositif de verrouillage selon l'invention à la fois une bonne fiabilité et une bonne efficacité.

En outre, le montage de la came coaxialement au moyeu permet d'avoir recours, pour provoquer sa rotation ou son immobilisation, à des moyens moteurs également disposés coaxialement, c'est-à-dire réalisables de façon techniquement simple et directement équilibrés en référence à l'axe de rotation du rotor principal.

Ainsi, selon un mode de réalisation préféré, les moyens moteurs commandés comportent un moteur commandé porté par le moyeu et une chaîne de transmission cinématique entre le moteur et la came, ce moteur commandé et cette chaîne de transmission cinématique étant disposés suivant l'axe de rotation du rotor principal. La chaîne de transmission cinématique peut alors comporter, entre un arbre de sortie du moteur, disposé suivant l'axe de rotation du rotor, et la came un train épicicloïdal imbriqué, offrant son avantage bien connu de répartition des efforts le long de cylindres primitifs présentant un rayon aussi important que possible, ici en référence à l'axe de rotation du rotor, pour un encombrement radial donné en référence à cet axe ; un tel choix contribue, au même titre que celui d'une came unique montée coaxialement au rotor principal, et constituant avantageusement une couronne dentée placée en prise directe avec les satellites du train épicycloïdal, à la robustesse et à la fiabilité du dispositif selon l'invention.

Naturellement, la commande des moyens moteurs commandés, à savoir le moteur dans le cas du mode de mise en oeuvre préféré qui vient d'être évoqué, est effectuée de préférence par l'intermédiaire de moyens manuels, mis à la disposition du pilote de l'hélicoptère ou d'un agent de manoeuvre ; dans le sens du verrouillage, elle est conditionnée par la détection de l'arrêt du rotor dans une orientation déterminée autour de son axe de rotation, par rapport à la cellule de l'hélicoptère, alors que la détection du déverrouillage conditionne l'entraînement du rotor à la rotation. On utilise à cet effet des moyens connus en eux-mêmes, dont l'adaptation au cas d'un dispositif selon l'invention relève des aptitudes normales d'un Homme du métier.

Les moyens de liaison cinématique entre la came et chaque organe de verrouillage peuvent connaître divers modes de réalisation, et consister par exemple en un contact glissant entre un chemin de came, convenablement aménagé sur la came en référence à l'axe de rotation du rotor, et chaque organe de verrouillage, comportant dans ce cas une zone formant toucheau de came.

Cependant, cette coopération s'effectue dans de meilleures conditions, d'un point de vue mécanique, si les moyens de liaison cinématique entre la came et chaque organe de verrouillage comportent un organe de roulement respectif, monté à la rotation sur l'un d'entre eux autour d'un axe respectif de roulement, parallèlement audit axe de rotation, et une contrepartie d'appui de cet organe de roulement contre l'autre d'entre eux. De préférence, chaque organe de roulement est porté par la came, ce qui correspond à des conditions optimales de montage et de fabrication.

Selon un autre mote de réalisation, également avantageux au point de vue mécanique, les moyens de liaison cinématique entre la came et chaque organe de verrouillage comportent une biellette respective, articulée sur chacun d'entre eux. Selon un mode de réalisation préféré, chaque biellette est articulée sur la came autour d'un axe respectif, d'orientation parallèle audit axe de rotation, et raccordée par une rotule respective à l'organe de verrouillage correspondant.

Les organes de verrouillage peuvent également connaître divers modes de réalisation, et par exemple consister en leviers convenablement articulés sur le moyeu, de façon décalée par rapport à leur zone coopérant avec la came ainsi que par rapport à leur zone coopérant avec la pale respectivement correspondante.

Cependant, selon un mode de réalisation préféré, chaque organe de verrouillage est constitué par un piston guidé à la translation par rapport au moyeu, suivant une direction déterminée de translation, entre les positions respectivement de verrouillage et de déverrouillage.

Quel que soit son mode de réalisation, chaque organe de verrouillage peut éventuellement constituer la contrepartie supérieure de butée pour la zone supérieure de butée de la pale respectivement correspondante, ou s'intégrer à cette contrepartie supérieure de butée, lorsque ledit organe de verrouillage occupe sa position de déverrouillage.

On préfère cependant dissocier les organes de verrouillage vis-à-vis des contreparties supérieures de butée, auquel cas les organes de verrouillage sont conçus de telle sorte que, en position de déverrouillage, ils ne puissent constituer une entrave aux déplacements de la zone supérieure de butée des pales lors de l'évolution de ces dernières en battement, entre leur orientation limite basse et leur orientation limite haute.

Notamment lorsque, selon un mode de réalisation connu, chaque pale s'appuie élastiquement, par l'intermédiaire d'un bloc travaillant élastiquement en compression, en cisaillement et en torsion sur l'appui respectivement correspondant, il est préférable de prévoir des moyens pour limiter la poussée appliquée par chaque organe de verrouillage, en position de verrouillage, à la zone supérieure de butée de la pale respective, en orientation limite basse.

Ces moyens peuvent comporter, dans le cas d'un montage élastique de chaque pale sur l'appui respectivement correspondant, une conformation de la came et des moyens de liaison cinématique de celle-ci avec chaque organe de verrouillage dans des conditions imposant un franchissement de point mort à proximité immédiate de la position de verrouillage ; cette solution peut également être adoptée si ces moyens de liaison cinématique, ou encore la came, ou encore chaque organe de verrouillage, offrent une certaine élasticité.

De façon plus générale, lorsque les organes de verrouillage sont constitués par des pistons, les moyens pour limiter la poussée peuvent comporter des moyens de butée de chaque piston par rapport au moyeu, en position de verrouillage. Quelle que soit la façon dont sont réalisés les organes de verrouillage, en variante ou en complément, lesdits moyens pour limiter la poussée peuvent également comporter un limiteur de couple intégré à ladite chaîne de transmission cinématique.

D'autres caractéristiques et avantages d'un dispositif selon l'invention ressortiront de la description ci-dessous, relative à deux variantes d'un exemple non limitatif de réalisation, ainsi que des dessins annexés qui font partie intégrante de cette description.

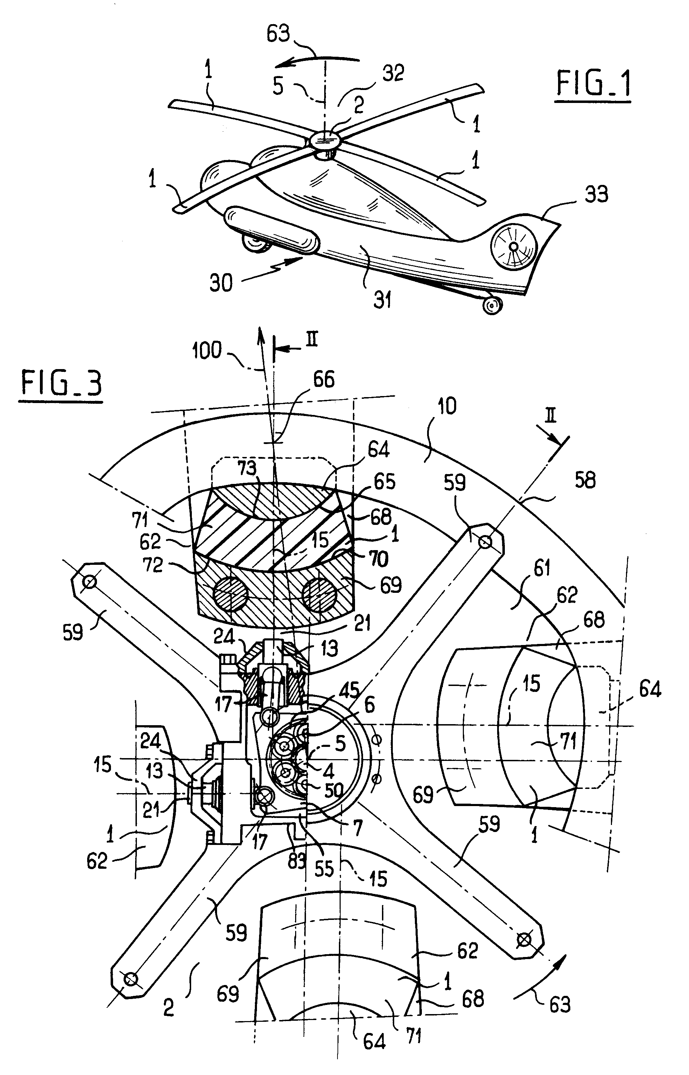

- La figure 1 montre une vue en perspective d'un hélicoptère à un seul rotor principal, à titre d'exemple non limitatif d'hélicoptère susceptible d'être équipé d'un dispositif selon l'invention ; dans le cas d'un hélicoptère comportant plusieurs rotors principaux, notamment deux rotors principaux, un tel dispositif pourrait être prévu respectivement pour chacun de ces rotors principaux.

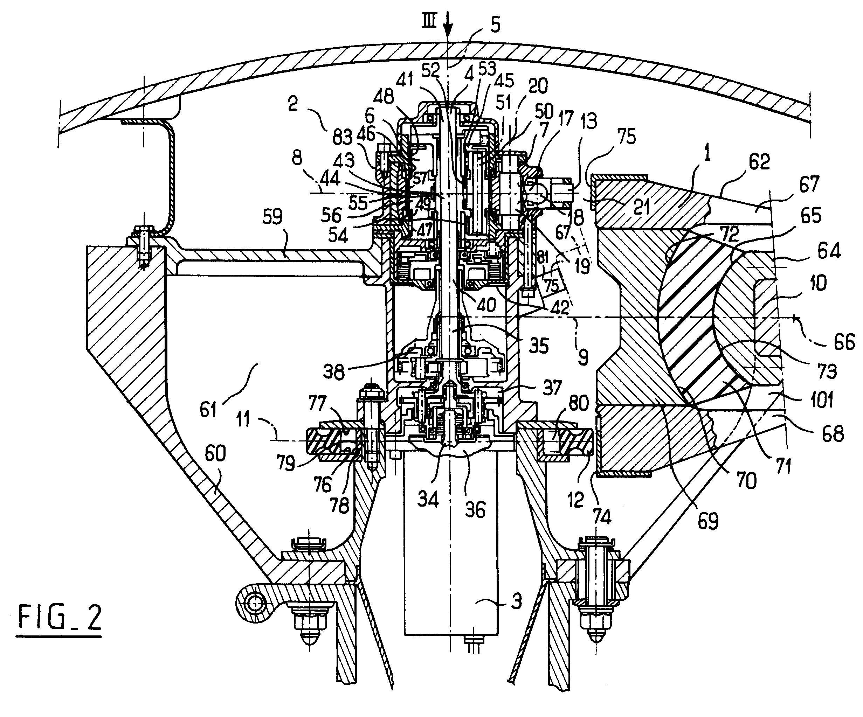

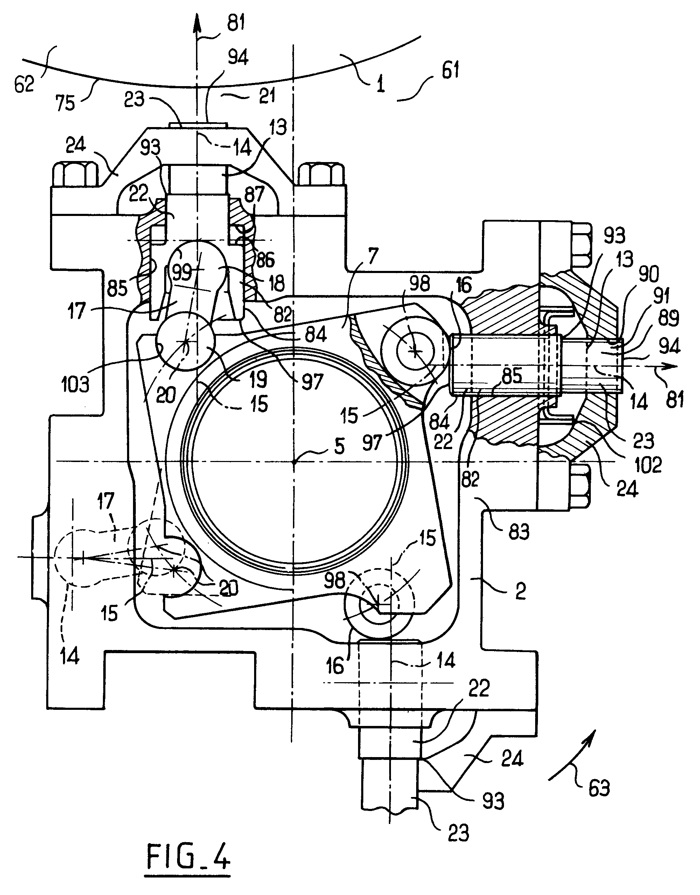

- La figure 2 illustre le dispositif selon l'invention, pour l'essentiel en coupe par deux demi-plans délimités par l'axe de rotation du rotor principal et repérés en II-II à la figure 3, alors que les pistons constituant les organes de verrouillage occupent leur position de déverrouillage.
- La figure 3 montre une vue partielle de ce même dispositif, pour partie en vue de dessus, dans un sens de l'axe de rotation du rotor principal repéré en III à la figure 2, et pour partie en coupe par divers plans non repérés, perpendiculaires à cet axe de rotation, alors que les pistons occupent leur position de déverrouillage.
- La figure 4 montre, en une vue analogue à celle de la figure 3 mais à plus grande échelle, d'une part le montage adopté dans cet exemple pour les pistons constituant les organes de verrouillage et d'autre part deux modes de coopération de ces pistons avec la came, respectivement dans la moitié de gauche de cette figure et dans sa moitié de droite, alors que les pistons occupent leur position de déverrouillage ou leur position de verrouillage, respectivement dans la moitié supérieure de cette figure et dans sa moitié inférieure.

On a illustré à la figure 1 un hélicoptère 30 comportant une cellule 31 et un rotor principal 32 monté à la rotation sur la cellule 31 autour d'un axe de rotation 5 approximativement vertical lorsque l'hélicoptère 30 est posé au sol. Plus précisément, le rotor 32 comporte un moyeu 2 ainsi monté à la rotation autour de l'axe 5 par rapport à la cellule 31, et susceptible d'être entraîné en rotation autour de cet axe, dans un sens déterminé 63, ou immobilisé à l'encontre d'une telle rotation, par rapport à la cellule 31, par des moyens non représentés, connus d'un Homme du métier ; le rotor 32 comporte en outre des pales 1, ici au nombre de quatre, orientées approximativement radialement par rapport à l'axe 5 autour duquel elles sont régulièrement réparties angulairement, si l'on se réfère à un état du rotor 32 illustré à la figure 1, correspondant à une position de service des pales 1. Par des moyens non représentés, connus d'un Homme du métier, les pales 1 peuvent être repliées le long de la cellule 31, vers la queue 33 de l'hélicoptère, après que le moyeu 2 ait été immobilisé dans une orientation déterminée, autour de l'axe 5, par rapport à la cellule 31 et que les pales aient été immobilisées, vis-à-vis du moyeu 2, en incidence, en traînée et en battement.

Cette immobilisation, de même que la libération, à nouveau, des pales en incidence, en traînée et en battement préalablement au décollage de l'hélicoptère 30 sont commandées par le pilote de celui-ci ou par un agent de manoeuvre, par l'intermédiaire de moyens de commande dont la réalisation relève des aptitudes normales d'un Homme du métier et qui ne seront de ce fait pas décrits.

La présente invention s'intéresse au verrouillage des pales en battement, c'est-à-dire au blocage d'un mouvement vertical de ces dernières par rapport au moyeu 2, et des moyens actuellement préférés à cet effet vont être décrits à présent, en référence aux figures 2 à 4.

Ces moyens comportent notamment un moteur électrique 3 de commande du verrouillage et du déverrouillage, dont l'alimentation en électricité en vue des opérations de verrouillage et de déverrouillage est commandée par les moyens de commande précités, mis à la disposition du pilote de l'hélicoptère ou d'un agent de manoeuvre, et dont l'arrêt peut être avantageusement provoqué automatiquement par tout moyen approprié, par exemple au moyen de dispositifs de détection de fin de course convenablement choisis et disposés.

Le moteur 3 est monté de façon solidaire à l'intérieur du moyeu 2, qui est creux, et il est disposé suivant l'axe 5; notamment, il présente vers le haut, suivant cet axe 5, un arbre de sortie 34 qui, par une alimentation appropriée du moteur 3 en électricité, peut tourner dans un sens ou dans l'autre, par rapport au moyeu 2, autour de l'axe 5.

Dans le prolongement coaxial de cet arbre de sortie 34, vers le haut, le moyeu 2 porte, à la rotation relative autour de l'axe 5 par l'intermédiaire de roulements non référencés, un arbre principal 4 présentant en regard de l'arbre de sortie 34 une zone d'extrémité inférieure 35 mécaniquement liée, vis-à-vis d'une rotation autour de l'axe 5 et par rapport au moyeu 2, à l'arbre de sortie 34 du moteur 3 par l'intermédiaire d'un limiteur de couple 36 comportant une partie menante non référencée solidaire de l'arbre de sortie 34 et une partie menée également non référencée, raccordée mécaniquement, en permanence, à la zone d'extrémité inférieure 35 de l'arbre principal 4 par l'intermédiaire d'un train d'engrenages 37, réducteur du limiteur de couple 36 vers l'arbre principal 4.

Le montage de l'arbre principal 4 à l'intérieur du moyeu 2, avec possibilité de rotation relative autour de l'axe 5, est tel que ne puisse par contre se produire aucun déplacement relatif suivant cet axe 5.

Le train d'engrenages 37 est par exemple un train épicycloïdal comportant un pignon central d'entrée, non référencé, solidaire de la partie menée du limiteur de couple 36, des satellites non référencés en prise avec ce pignon et portés par un porte-satellites non référencé, solidaire de la zone d'extrémité inférieure 35 de l'arbre principal 7, et une couronne périphérique 38, en prise avec les satellites et montée à la rotation autour de l'axe 5 sur la zone d'extrémité inférieure 35 de l'arbre principal 4, par rapport à ce dernier comme par rapport au moyeu 2.

Au niveau d'une zone 40 intermédiaire entre la zone d'extrémité inférieure 35 de l'arbre principal 4 et une zone d'extrémité supérieure 41 de celui-ci, la couronne 38 est en prise permanente avec un frein à déclenchement 42 de type connu, l'immobilisant par rapport au moyeu 2 pendant une phase de rotation de l'arbre de sortie 34 du moteur 3 dans un sens correspondant au verrouillage ou au déverrouillage, respectivement, pour permettre respectivement le verrouillage ou le déverrouillage en battement par entraînement de l'arbre principal 4 à la rotation autour de l'axe 5 par rapport au moyeu 2, jusqu'à ce que le verrouillage ou le déverrouillage en battement, respectivement, soit terminé ; ceci se traduit par un arrêt coercitif de l'arbre principal 4, se traduisant lui-même par l'apparition, au niveau de la couronne 38, d'un couple dont la valeur croît jusqu'à dépasser un seuil déterminé, réglable, à partir duquel le frein 42 libère la couronne 38 vis-à-vis d'une rotation autour de l'axe 5 par rapport au moyeu 2 si bien qu'une éventuelle poursuite de la rotation de l'arbre de sortie 34 du moteur 3, dans le même sens, après que le verrouillage ou déverrouillage en battement soit terminé ne peut se traduire par un endommagement des moyens prévus à cet effet, décrits par la suite, des pales 1 et des moyens, également décrits par la suite, assurant leur montage sur le moyeu 2.

Dans une zone 43 quant à elle intermédiaire entre la zone 40 précitée et la zone d'extrémité supérieure 41, l'arbre principal 4 porte par ailleurs, de façon solidaire, une denture périphérique extérieure 44 constituant l'élément menant d'un train d'engrenages épicycloïdal imbriqué 6, également logé à l'intérieur du moyeu 2.

La denture 44, de même que l'ensemble du train épicycloïdal 6, présente un plan de symétrie propre 8 perpendiculaire à l'axe 5 et situé dans une zone d'extrémité supérieure, non référencée, du moyeu 2.

Autour de la zone intermédiaire 43 de l'arbre principal 4, cette zone d'extrémité supérieure du moyeu 2 délimite une cavité 45 annulaire de révolution autour de l'axe 5, symétrique par rapport au plan 8 et s'étendant respectivement vers le haut et vers le bas plus loin que la denture 44.

A des niveaux respectivement supérieur et inférieur à celui de la denture 44, la cavité 45 est délimitée, dans le sens d'un éloignement par rapport à l'axe 5, par des faces périphériques intérieures 46, 47 de forme générale cylindrique de révolution autour de l'axe 5 vers lequel elles sont tournées, avec un diamètre identique, et ces deux faces 46 et 47 portent des dentures droites mutuellement identiques 48, 49, mutuellement symétriques par rapport au plan 8.

A l'intérieur de la cavité 45 sont disposés plusieurs satellites mutuellement identiques 50, d'axe respectif 51, parallèle à l'axe 5 dont les différents axes 51 sont équidistants et autour duquel ces axes 51 sont équirépartis angulairement, le nombre de satellites 50 étant aussi grand que possible, à savoir de six dans l'exemple illustré, compte tenu des dimensions de la cavité 45 et de la nécessité d'éviter des interférences entre eux.

Chaque satellite 50 est symétrique par rapport au plan 8 et présente dans le sens d'un éloignement par rapport à l'axe 51 trois dentures droites extérieures, à savoir :
- dans un tronçon non référencé, central en référence à l'axe 51 et chevauchant le plan moyen 8, une denture 52 symétrique par rapport à celui-ci et en prise permanente avec la denture 44 de l'arbre principal 4 et,
- dans deux tronçons extrêmes également non référencés, mutuellement symétriques par rapport au plan 8, deux dentures mutuellement identiques 53, 54, également mutuellement symétriques par rapport au plan 8 et quant à elles en prise permanente respectivement avec la denture intérieure 46 et avec la denture intérieure 47, ces dentures 53 et 54 présentant un diamètre primitif identique, inférieur à celui de la denture 52.

On remarquera que la présence d'un porte-satellites n'est pas indispensable, les satellites 50 étant retenus radialement, en référence à l'axe 5, par la coopération de leurs dentures 52, 53, 54 avec les dentures 44, 46 et 47, respectivement, alors que leur retenue parallèlement à l'axe 5 peut être avantageusement assurée par appui, à l'intérieur de la cavité 45 du moyeu 2, sur des bagues d'un matériau à faible coefficient de frottement, de façon non détaillée mais aisément compréhensible d'un Homme du métier.

Entre les faces 46 et 47, c'est-à-dire entre les dentures 48 et 49, la cavité 45 présente une extension annulaire périphérique 55, chevauchant le plan 8 et symétrique par rapport à celui-ci, et à l'intérieur de cette extension 55 est logée une came annulaire 7, d'axe 5, qui entoure les satellites 50 et présente une forme générale plate perpendiculairement au plan moyen 8 qui constitue également pour elle un plan de symétrie.

Des moyens qui ne seront pas détaillés, dans la mesure où leur réalisation relève des aptitudes normales d'un Homme du métier, assurent un guidage de la came 7 à la rotation autour de l'axe 5 par rapport au moyeu 2, sans autre possibilité de déplacement relatif.

Vers l'axe 5, entre les faces 48 et 49, la came 7 est délimitée par une face périphérique intérieure 56 présentant une forme générale cylindrique de révolution autour de l'axe 5 et munie d'une denture droite 57 en prise permanente avec les dentures 52 respectives des différents satellites 50, et constitue ainsi l'élément mené du train épicycloïdal 6.

On comprend que, lorsque l'arbre principal 4 est entraîné à la rotation autour de l'axe 5 par le moteur 3, dans un sens ou dans l'autre, par rapport au moyeu 2, la came 7 tourne autour de l'axe 5 par rapport au moyeu 2, dans le même sens que l'arbre principal 4 mais à une vitesse angulaire inférieure.

Par cette rotation, en pratique limitée entre deux positions angulaires mutuellement décalées de quelques degrés en référence à l'axe 5, la came 7 est destinée à assurer le verrouillage ou le déverrouillage, suivant son sens de rotation autour de l'axe 5 par rapport au moyeu 2, de l'ensemble des pales 1, simultanément, vis-à-vis d'un battement, par l'intermédiaire d'autant d'organes de verrouillage que de pales 1. Ces organes de verrouillage sont constitués, dans l'exemple non limitatif illustré, par des pistons de verrouillage 13 dont la conception, le montage et le mode de coopération avec la came 7, d'une part, et avec les pales 1, d'autre part, sera décrit après que l'on ait rappelé le montage, connu en lui-même, des pales 1 sur le moyeu 2.

Pour assurer ce montage, le moyeu 2 porte de façon solidaire, par l'intermédiaire de paires de bras situées dans des demi-plans 58 limités par l'axe 5 et situés entre les pales 1, de façon équirépartie angulairement autour de l'axe 5, à raison d'un bras supérieur respectif 59 s'éloignant du moyeu 2 approximativement radialement, en référence à l'axe 5, et d'un bras inférieur respectif 60 ascendant dans le sens d'un éloignement par rapport à l'axe 5, à partir du moyeu 2, une couronne 10 présentant une forme générale approximativement de révolution autour de l'axe 5 et entourant le moyeu 2 en laissant subsister autour de lui un jeu annulaire continu 61.

La couronne 10 présente un plan moyen 9 perpendiculaire à l'axe 5 et situé à un niveau inférieur à celui du plan 8. Ce plan 9 constitue également pour chaque pale 1 un plan moyen, au niveau d'une zone extrême 62 par laquelle cette pale 1, respectivement, se raccorde à l'anneau 10 et, par l'intermédiaire de celui-ci, au moyeu 2.

Au niveau de sa zone extrême 62, chaque pale 1 présente en outre un plan moyen respectif 15 qui, en référence à une orientation privilégiée que cette pale 1 tend élastiquement à occuper à l'arrêt du rotor, dans laquelle des moyens appropriés, non représentés et non décrits dans la mesure où ils n'entrent pas dans le cadre de la présente invention, immobilisent cette pale 1 en incidence et en trainée par rapport au moyeu 2, et dans laquelle s'effectue également l'immobilisation en battement conformément à la présente invention, est perpendiculaire au plan 8 et parallèle à l'axe 5, autour duquel les plans 15 sont équirépartis angulairement et par rapport auquel ces plans 15 présentent des positions respectives identiques ; en d'autres termes, les différents plans 15 sont équidistants de l'axe 5 et décalés par rapport à lui dans un même sens, à savoir le sens 63 de rotation du rotor principal 32 autour de l'axe 5 par rapport à la cellule 31 de l'hélicoptère 30.

Pour les besoins de la présente description, les pales 1 seront par la suite supposées occuper, en incidence et en traînée, notamment quant à leur plan 15 respectif, ainsi qu'en battement l'orientation privilégiée, précitée, dans laquelle elles doivent être immobilisées par rapport au moyeu 2.

Suivant chaque plan 15 respectivement, pour recevoir la pale 1 respectivement correspondante, la couronne 10 porte de façon solidaire une rotule 64 présentant vers l'axe 5, à l'intérieur du jeu 61, une face périphérique extérieure 65 en forme de calotte sphérique convexe, centrée en un point 66 situé sur l'intersection dudit plan 15 avec le plan moyen 9 de la couronne 10.

Considérée dans une vue en coupe suivant le plan 15, comme le montre la figure 2, ou suivant un quelconque plan parallèle à ce plan 15, la zone extrême 62 de chaque pale 1 présente vers l'axe 5 la forme d'un étrier chevauchant la couronne 10 au niveau de la rotule 64 respectivement correspondante, par le haut et par le bas, respectivement par un bras supérieur 67 et par un bras inférieur 68 orientés approximativement radialement en référence à l'axe 5. A l'intérieur du jeu 61, entre le moyeu 2 et la rotule 64 respectivement correspondante, ces deux bras 67 et 68 sont raccordés mutuellement, de façon solidaire, par une pièce de liaison 69 présentant dans le sens d'un éloignement par rapport à l'axe 5, en regard de la face sphérique 65 de la rotule 64, une face 70 également en forme de calotte sphérique, concave au lieu d'être convexe comme la face 65 de la rotule 64, et sensiblement concentrique à cette dernière dans une position relative déterminée à partir de laquelle la face 70 peut toutefois légèrement se décaler élastiquement.

En effet, entre les faces 70 et 65 est interposée une noix 71 d'un matériau élastique en compression et, éventuellement, traction ainsi qu'en cisaillement, épousant par une face 72 la face 70 de la pièce de liaison 69 avec laquelle elle est solidarisée de façon continue par ces faces 70 et 72, par exemple par collage, et par une face 73 la face 65 de la rotule 64 avec laquelle elle est également solidarisée de façon continue par ces faces 65 et 73, par exemple par collage, en offrant à la pale 1 un appui sur la rotule 64 notamment dans le sens d'un éloignement par rapport à l'axe 5, suivant une direction 100 radiale par rapport à celui-ci et passant par le point 66, de même que dans des directions, telles que l'intersection des plans 9 et 15, passant par le point 66 et approximativement radiales par rapport à l'axe 5, c'est-à-dire décalées angulairement d'un maximum de quelques degrés par rapport à cette direction 100, lesquelles seront considérées également comme radiales par rapport à l'axe 5 par commodité de language.

La zone extrême 62 de chaque pale 1 respecte par ailleurs un jeu continu 101 par rapport à l'anneau 10.

Cet appui de chaque pale 1 sur la couronne 10, par l'intermédiaire de la noix 71 et de la rotule 64 correspondante, permet :
- d'une part une rotation limitée de la zone extrême 62 de la pale 1 autour du point 66 par rapport à la couronne 10, notamment dans le sens de la hauteur, ce qui correspond au battement de la pale 1 par rapport au moyeu 2, une telle rotation s'accompagnant d'un travail de la noix 71 en cisaillement élastique entre les faces 70 et 65,
- d'autre part un léger décentrement entre les faces 70 et 65, mettant en jeu l'élasticité de la noix 71 qui est alors contrainte en compression élastique et, éventuellement, en traction élastique entre ces faces.

Naturellement, le montage précité des pales autorise en particulier un basculement de chaque pale 1 vers le bas, autour du point 66 respectivement associé, lorsqu'aucun effort tel qu'un effort de sustentation ne s'y oppose alors que l'apparition d'une sustentation tend à faire basculer chaque pale 1, autour du point 66 respectivement correspondant, vers le haut par rapport à la couronne 10.

On prévoit par conséquent des moyens pour imposer des limites à ce basculement.

Sur la zone extrême 62 de chaque pale 1, ces moyens comportent respectivement sur le bras supérieur 67 et le bras inférieur 68, vers l'axe 5, une zone supérieure 73 de butée centripète, en référence à l'axe 5, sur le moyeu 2, et une zone inférieure 74 de butée centripète, également en référence à l'axe 5, sur ce moyeu 2.

Par butée centripète en référence à l'axe 5, on entend dans le cadre de la présente description non seulement une butée dans un sens centripète d'une direction rigoureusement radiale par rapport à l'axe 5 mais également une butée selon une direction, par exemple du plan 15, approximativement radiale en référence à cet axe, c'est-à-dire décalée angulairement d'un maximum de quelques degrés par rapport à une direction rigoureusement radiale par rapport à l'axe 5, et plus précisément dans un sens d'une telle direction approximativement radiale par rapport à l'axe 5 présentant une projection centripète, en référence à cet axe 5, sur une direction rigoureusement radiale par rapport à celui-ci.

Dans une orientation limite basse que chaque pale 1 occupe, sous l'effet de la gravité, en l'absence de sustentation et qui est illustrée à la figure 2, les deux zones de butée centripète 73, 74 sont mutuellement symétriques par rapport au plan 9, de même que l'ensemble de la zone extrême 62 de chaque pale 1. Si l'on se réfère à cette orientation, les zones 73 et 74 présentent la forme de faces perpendiculaires au plan 9, respectivement symétriques, au moins partiellement, par rapport au plan 15 respectivement correspondant, et convexes vers l'axe 5, ces deux faces présentant avantageusement la forme d'une partie de cylindre de révolution autour d'un axe non référencé, perpendiculaire au plan 9 et passant par le point 66 respectivement correspondant ou à proximité immédiate de ce point ; en outre, en référence à cette position, la zone supérieure 73 de butée centripète est symétrique par rapport au plan moyen 8 alors que la zone inférieure 74 de butée centripète est symétrique par rapport à un plan moyen 11 perpendiculaire à l'axe 5 et symétrique du plan 8 par rapport au plan 9.

Suivant ce plan moyen 11, le moyeu 2 porte une contrepartie inférieure de butée centripète pour chacune des zones inférieures 74 de butée centripète lorsque les pales 1 occupent leur orientation limite basse. Cette contrepartie est réalisée sous la forme d'une butée 12, annulaire de révolution autour de l'axe 5 et de ce fait commune à l'ensemble des zones inférieures 74 de butée centripète. Cette butée annulaire 12 est rigide et retenue à l'encontre de tout déplacement parallèlement à l'axe 5, par rapport au moyeu 2, mais avec possibilité d'un léger débattement radial en référence à cet axe 5, dans une gorge 76, annulaire de révolution autour de l'axe 5, que le moyeu 2 présente à cet effet suivant le plan moyen 11. Cette gorge 76 est délimitée respectivement vers le haut et vers le bas par des faces de flanc 77, 78 annulaires, planes, de révolution autour de l'axe 5 auquel elles sont perpendiculaires, et vers cet axe 5 par une face 79 cylindrique de révolution autour de cet axe 5 et tournée dans le sens d'un éloignement par rapport à celui-ci. Complémentairement, la butée annulaire 12 présente lorsqu'elle est vue en coupe par un plan incluant l'axe 5, une section courante approximativement rectangulaire comme il ressort de l'examen de la figure 2, avec un dimensionnement tel qu'elle soit en appui glissant contre les faces de flanc 77 et 78 de la gorge 76 mais respecte vis-à-vis de la face de fond 79 de celle-ci un jeu annulaire 80 autorisant un auto-positionnement de la butée annulaire 12, radialement en référence à l'axe 5, sous l'action des zones inférieures 74 respectives de butée centripète des différentes pales 1.

Pour constituer une contrepartie de butée centripète, en référence à l'axe 5, pour la zone supérieure 75 de butée centripète de chaque pale 1, le moyeu 2 porte par ailleurs, de façon solidaire, à un niveau intermédiaire entre les niveaux respectifs des plans moyens 8 et 9, à l'intérieur du jeu annulaire continu 61, autant de blocs 81 d'un matériau élastiquement compressible que de pales 1, chacun de ces blocs 81 étant disposé suivant le plan moyen 15 respectif et orienté de telle sorte que la zone supérieure 75 de butée centripète de la pale 1 respectivement correspondante s'applique contre lui, vers l'axe 5, dans l'orientation limite haute de la pale 1, comme on l'a schématisé par un trait mixte, pour le bras supérieur 67 et la zone supérieure 75 de butée centripète, à la figure 2.

Les orientations limites haute et basse des différentes pales 1 sont de préférence respectivement identiques mutuellement, en référence à l'axe 5.

Le dispositif selon l'invention est destiné à immobiliser provisoirement, de façon commandée, chaque pale 1 dans son orientation limite basse, à l'encontre d'un battement, alors que chaque pale 1 est par ailleurs destinée à être immobilisée provisoirement par les moyens appropriés, précités, en incidence et en traînée.

A cet effet est appliquée à chaque pale 1, occupant son orientation limite basse, c'est-à-dire prenant appui vers l'axe 5 sur la butée annulaire 12 par sa zone inférieure 74 de butée centripète, une poussée centrifuge, en référence à l'axe 5, à un niveau supérieur à celui du plan 9 et en pratique au niveau du plan 8, c'est-à-dire sur la zone supérieure 75 respective de butée centripète ou sur une zone suffisamment proche de cette zone 75 pour être raisonnablement considérée comme confondue avec elle, au regard de l'effet de verrouillage recherché.

A cet effet, le piston 13 respectivement associé à chaque pale 1 est monté au coulissement, par rapport au moyeu 2, suivant un axe 14 respectif défini par l'intersection du plan 8 avec le plan 15 respectif, entre une position de verrouillage de la pale 1 associée, dans laquelle ce piston s'applique dans le sens d'un éloignement par rapport à l'axe 5 contre la zone supérieure 75 de butée centripète de cette pale 1, par ailleurs en appui centrifuge sur la couronne 10 par l'intermédiaire de la rotule 74 associée et en butée centripète sur la butée annulaire 12 par l'intermédiaire de la zone inférieure 74 correspondante de butée centripète, de façon illustrée schématiquement dans la moitié inférieure de la figure 4, et une position de déverrouillage ou de libération de la pale 1 respectivement associée, dans laquelle le piston 12 est comparativement décalé vers l'axe 5, c'est-à-dire respecte un jeu 21 vis-à-vis de la zone supérieure 75 de butée centripète de la pale 1 respectivement associée lorsque cette dernière occupe son orientation limite basse, de façon illustrée aux figures 2 et 3 et dans la moitié supérieure de la figure 4.

Chaque piston 12 peut être réalisé en monobloc ou non, et doit être suffisamment décalé vers l'axe 5 par rapport à la zone supérieure 75 respectivement correspondante de butée centripète, alors que la pale 1 occupe son orientation limite basse et qu'il occupe lui-même sa position de déverrouillage, pour que le jeu 21 qui en résulte soit suffisant pour autoriser un battement de la pale 1 respectivement associée jusqu'à son orientation limite haute.

Un Homme du métier saura comment dimensionner et positionner, à cet effet, la course du piston 12 entre ses positions respectivement de verrouillage et de déverrouillage.

Dans l'exemple illustré, le piston 13 se compose de deux parties 22, 23 qui, si l'on se réfère à la position de verrouillage ou à la position de déverrouillage, se succèdent suivant l'axe 14 respectif, dans le sens 81 de cet axe 14 allant de l'intérieur de l'extension annulaire 55 de la cavité 45 du moyeu 2 vers l'extérieur de cette cavité, c'est-à-dire de la came 7 ou de l'axe 5 vers la pale 1 ou la zone supérieure 75 de butée centripète de celle-ci, supposée occupant son orientation limite basse. Ce sens 81 sera considéré comme centrifuge, en référence à l'axe 5, avec le même degré d'approximation que les butées supérieure et inférieure de la zone extrême 62 contre le moyeu 2, par les zones 75 et 74, sont considérées comme centripètes par rapport à cet axe 5.

La partie 22, constituant la partie postérieure en référence au sens 81 et par conséquent la plus proche de la came 7, est guidée au coulissement suivant l'axe 14 dans un alésage traversant 82 convenablement aménagé, à cet effet, dans une paroi 83 faisant partie intégrante du moyeu 2 et délimitant l'extension annulaire 55 de la cavité 45 de celui-ci vers l'extérieur, c'est-à-dire dans le sens d'un éloignement par rapport à l'axe 5. La paroi 83 comporte ainsi quatre alésages 82, respectivement disposés suivant chacun des axes 14 correspondant à l'intersection, avec le plan 8, d'un plan 15 respectif.

Dans le sens d'un éloignement par rapport à l'axe 14, la partie postérieure 22 de chaque piston 13 et l'alésage 82 respectivement correspondant sont avantageusement délimités par des faces périphériques respectives 84, 85 cylindriques de révolution autour de l'axe 14 correspondant, lesquelles faces 84 et 85 présentent des diamètres respectifs sensiblement correspondants et peuvent être lisses comme on l'a illustré dans la partie droite de la figure 4, ainsi qu'aux figures 2 et 3, ou encore être étagées de façon à définir sur chacune d'elles un épaulement 86, 87, annulaire de révolution autour de l'axe 14 comme on l'a illustré dans le quart supérieur de gauche de la figure 4, les deux épaulements 86 et 87 étant susceptibles de venir en contact mutuel par coulissement de la partie postérieure 22 du piston 13 dans le sens 81 par rapport à la paroi 83 du moyeu 2, de façon à définir une limite à un déplacement du piston 13 vers l'extérieur du moyeu 2.

Dans le sens 81, chaque partie postérieure 22 se raccorde à la partie antérieure 23 correspondante.

Cette dernière est quant à elle montée au coulissement suivant l'axe 14 respectif dans un support respectif 24, fixé, par exemple par boulonnage, sur la paroi 83 du moyeu 2, en porte-à-faux à l'extérieur de celui-ci, et présentant lorsqu'il est vu de dessus, comme le montrent les figures 3 et 4, une forme en U, de façon à dégager un jeu vis-à-vis de la paroi 83 du moyeu 2, en regard de l'alésage 82 correspondant.

Suivant l'axe 14 respectif, chaque support 24 est percé de part en part d'un alésage 89 délimité par une face périphérique intérieure 90 par exemple cylindrique de révolution autour de l'axe 14 ; de façon complémentaire, en vue d'assurer son guidage à la translation suivant l'axe 14 respectif dans le support 24 correspondant, chaque partie antérieure 23 de piston 13 est délimitée dans le sens d'un éloignement par rapport à l'axe 14 par une face périphérique extérieure 91 également cylindrique de révolution autour de cet axe, avec un diamètre correspondant sensiblement à celui de la face 90.

A la jonction entre les parties antérieure 23 et postérieure 22 de chaque piston de verrouillage 13, la face 91 se raccorde à la face 84 par un épaulement 93 tourné vers l'avant, en référence au sens 81, et présentant une forme annulaire de révolution autour de l'axe 14 respectif; cet épaulement 93 est destiné à coopérer avec le support 24 pour constituer une butée à l'encontre d'un déplacement du piston 13 dans le sens 81, au-delà d'une position limite au même titre que la coopération des épaulements éventuels 86 et 87, de façon à limiter la poussée susceptible d'être appliquée par chaque piston 13 à la zone supérieure 75 de butée centripète de la pale 1 respectivement correspondante, lorsque les pistons 13 occupent leur position de verrouillage des pales 1 en battement, à une valeur telle qu'il n'en résulte aucun endommagement des noix 71 et de la butée annulaire 12.

Vers l'avant en référence au sens 81, chaque partie antérieure 23 de piston 13 est délimitée par une face frontale 94 présentant une forme adaptée à celle de la zone supérieure 75 de butée centripète de la pale 1 respectivement correspondante, de telle sorte que le piston 13 en position de verrouillage applique à cette zone 75 une poussée suivant l'axe 14, ne se traduisant par aucune tendance de la pale 1 à basculer par rapport au plan 15 correspondant ; par exemple, à cet effet, chaque face 94 présente la forme d'un disque plan, perpendiculaire à l'axe 14 correspondant.

A l'arrêt du rotor 32, chaque piston 13 peut évoluer entre sa position de déverrouillage, en battement, de la pale 1 respectivement associée, position dans laquelle il respecte le jeu 21 précité, et sa position de verrouillage de cette pale 1 en battement, position dans laquelle, après franchissement du jeu 21, il s'applique par la face 94 de sa partie antérieure 23, fermement, contre la zone supérieure 75 de butée centripète de la pale 1.

Ce passage de chaque piston 13 de la position de verrouillage à la position de déverrouillage, puis en retour de la position de verrouillage à la position de déverrouillage, dans laquelle le jeu 21 est rétabli, s'accomplit par coopération de chaque piston 13, et plus précisément de chaque partie postérieure 22 de piston 13, avec la came 7.

Cette coopération peut présenter diverses formes, indépendamment de la présence ou de l'absence, sur les parties postérieures 22 du piston 13 et dans les alésages 82 respectivement correspondants, d'épaulements de butée mutuelle tels que 86 et 87.

Deux exemples de cette coopération ont été illustrés aux figures, étant entendu que d'autres modes de coopération pourraient être choisis sans que l'on sorte pour autant du cadre de la présente invention.

Selon l'un de ces modes de coopération, illustré dans la moitié de droite de la figure 4, chaque partie postérieure 22 de piston 13 est délimitée vers l'arrière, en référence au sens 81, par une face postérieure 97 en forme de disque plan, perpendiculaire à l'axe 14, et s'appuie en sens opposé au sens 81, par cette face 97, sur un organe de roulement respectif que la came 7 présente dans une position appropriée, en autant d'exemplaires que de pistons 13, à une même distance de l'axe 5 et selon une répartition angulaire, autour de celui-ci, identique à celle des pales 1.

Dans l'exemple illustré, cet organe de roulement est constitué par un galet respectif 16, monté à la rotation sur la came 7 autour d'un axe respectif 98 parallèle à l'axe 5 ; selon une variante non représentée de ce mode de réalisation, les organes de roulement tels que les galets 16 peuvent également être portés par les parties postérieures 22 des pistons 13, ou encore être supprimés, auquel cas la came 7 présente dans le sens d'un éloignement par rapport à l'axe 5, dans une vue selon cet axe, une face périphérique extérieure formant chemin de came, présentant une forme telle que, par rotation de la came 7 de quelques degrés autour de l'axe 5 par rapport au moyeu 2, le franchissement du chemin de came par l'organe de roulement porté par la partie postérieure 22 de chaque piston 13 ou directement par la face postérieure 97 de cette partie postérieure 22 provoque, dans un sens de rotation de la came 7 par rapport au moyeu 2 opposé au sens 63, un passage de chaque piston 13 de la position de déverrouillage à la position de verrouillage, et autorise, par une rotation opposée, mais de même valeur, de la came 7 autour de l'axe 5 par rapport au moyeu 2, le retour de chaque piston 13 de sa position de verrouillage à sa position de déverrouillage ; ce mouvement est avantageusement facilité, de façon non détaillée mais aisément compréhensible par un Homme du métier, par un ressort 102 sollicitant chaque piston 13, au niveau de sa partie postérieure 22 ou, de façon non illustrée, au niveau de sa partie antérieure 23, en sens opposé au sens 81.

Selon un autre mode de coopération, illustré dans la moitié gauche de la figure 4 ainsi qu'aux figures 2 et 3, chaque partie postérieure 22 de piston 13 est raccordée à la came 7 par l'intermédiaire d'une biellette respective 17 articulée :
- d'une part sur la partie postérieure 22 de piston 13 par l'intermédiaire d'une rotule sphérique 18 engagée dans un logement hémisphérique 99 aménagé complémentairement, en creux, dans la face postérieure 97 de la partie postérieure 22 de piston 13, la rotule sphérique étant avantageusement retenue par un jonc ou un circlip non représenté, de façon toutefois aisément compréhensible par un Homme du métier, dans son logement 99,
- d'autre part sur la came 7 soit, de façon non représentée, par l'intermédiaire d'une autre rotule sphérique avantageusement reçue et retenue de la même façon dans un logement aménagé complémentairement dans la came 7, soit, comme il est illustré, par l'intermédiaire d'une partie extrême 19 cylindrique de révolution autour d'un axe 20 parallèle à l'axe 5, reçue et guidée au coulissement, parallèlement à cet axe 5, dans un logement 103 convenablement aménagé dans la came 7, la partie extrême 19 de même que ce logement 103 présentant en référence à l'axe 20, commun, un développement angulaire respectif supérieur à 180°.

On remarquera que dans ce cas, la partie postérieure 22 de chaque piston 13 reste liée à la came 7 dans les deux sens de rotation de celle-ci, c'est-à-dire non seulement au verrouillage mais également au déverrouillage.

Ce dernier montage se prête tout particulièrement bien, de façon non illustrée mais aisément compréhensible par un Homme du métier, à une limitation de la translation de chaque piston 13 suivant la direction 14 respective, pour limiter la poussée appliquée par chaque piston en position de verrouillage à la zone supérieure 75 d'appui centripète de la pale 1 respectivement associée, par le moyen d'un franchissement de point mort par chaque biellette 17.

A cet effet, alors que chaque rotule 18 et le logement 99 prévu pour la recevoir, dans une partie postérieure 22 de piston 13, sont disposés suivant l'axe 14 associé, on prévoit que pour l'essentiel de la rotation de la came 7 autour de l'axe 5 par rapport au moyeu 2 dans le sens d'un passage de la position de déverrouillage à la position de verrouillage, chaque axe 20 soit décalé dans le sens 63 par rapport au plan 15 respectivement correspondant, puis qu'il franchisse ce plan 15 pour se décaler par rapport à lui, dans le sens 63, moins qu'il n'était décalé en sens opposé en position de déverrouillage, lors de la poursuite de la rotation de la came 7, comme on l'a schématisé dans la partie inférieure de gauche de la figure 4 dont la partie inférieure de droite illustre la coopération d'un organe de roulement en forme de galet 16 avec un piston 13 et la coopération de l'épaulement 93 de la partie antérieure 23 d'un tel piston 13 avec le support 24 correspondant, en position de verrouillage. La came 7 est alors avantageusement immobilisée par rapport au moyeu 2, dans sa position correspondant au verrouillage, par venue en butée contre une contrepartie telle que la paroi 83 du moyeu 2.

Un tel mode de limitation, par franchissement de point mort, de la translation de chaque piston 13 vers la position de verrouillage, et par conséquent de la poussée que chaque piston 13 applique à la pale 1 correspondante dans cette position, pourrait également être adopté lorsque chaque piston 13 coopère avec la came 7 par l'intermédiaire d'un organe de roulement tel qu'un galet 16 ou par glissement direct.

Dans l'un et l'autre de ces modes de coopération entre la came 7 et chaque piston 13, le mouvement de retour de chaque piston 13 à sa position de déverrouillage est avantageusement limité par venue de la came 7 en butée dans le sens 63 contre une contrepartie aménagée à l'intérieur du moyeu 2 et par exemple constituée directement par la paroi 83 de celui-ci.

Lorsque, après arrêt du rotor 32, on désire procéder au verrouillage des pales 1 en battement, on met en route le moteur 3 de telle sorte que son arbre de sortie 34 entraîne la came 7, par l'intermédiaire de l'arbre principal 4, en sens opposé au sens 63 par rapport au moyeu 2. Au cours de cette rotation, chaque piston 13 peut gagner sans entrave sa position de verrouillage en battement alors que la couronne 38 est retenue par le frein 42, si bien que les pistons 13 gagnent à l'unisson leur position de verrouillage. Lorsque cette position est atteinte, la butée de chaque piston 13 dans le sens 81 par sa partie antérieure 23 sur le support 24 respectivement correspondant ou par sa partie postérieure 22 sur la paroi 83 et/ou la butée de la came 7 en sens opposé au sens 63 par rapport au moyeu 2 immobilise la came 7 et, avec elle, l'arbre principal 4 si bien que, si le moteur continue à fonctionner, le couple de l'arbre de sortie 34 du moteur se transmet à la couronne 38 avec une valeur qui surcompense le couple opposé par le frein 42 convenablement réglé à cet effet, si bien que la couronne entre en rotation autour de l'axe 5 par rapport au moyeu 2. Une fois le verrouillage effectué, le moteur 3 est arrêté. Lorsqu'on désire ensuite procéder au déverrouillage des pales 1, on met en route le moteur 3 de façon à entraîner la came 7 dans le sens 63 par rapport au moyeu 2, ce qui provoque le passage des pistons 13 à leur position de déverrouillage en battement, le frein 42 immobilisant la couronne 38. Lorsque cette position est atteinte et la came 7 arrêtée par exemple par butée contre la paroi 83 du moyeu 2, et si le moteur 3 continue à fonctionner, le couple de l'arbre de sortie 34 du moteur 3 se transfère à la couronne 38 qui se libère alors du frein 42. Lorsque les pales 1 sont ainsi libérées en battement, le moteur 3 est arrêté.

Quel que soit le mode de réalisation choisi pour les moyens de limitation de la poussée appliquée à chaque pale 1 par le piston 13 respectivement correspondant, en position de verrouillage, des moyens dont le choix ou la réalisation relèvent des aptitudes normales d'un Homme du métier, mettant en oeuvre par exemple la détection d'un glissement au niveau du limiteur de couple 36 ou de positions prédéterminées de l'un quelconque des organes se déplaçant lors du verrouillage ou du déverrouillage en battement, sont avantageusement prévus pour interrompre l'alimentation du moteur 3, c'est-à-dire arrêter celui-ci, lorsque la position limite recherchée de chaque piston 13, à savoir sa position de verrouillage ou sa position de déverrouillage, est atteinte.

Naturellement, d'autres moyens pourraient être utilisés pour enchainer les séquences de verrouillage ou de déverrouillage en battement. Notamment, la couronne 38 et le frein 42 pourraient être supprimés et le train épicycloïdal 37 pourrait être remplacé par un simple réducteur, toute rotation de l'arbre de sortie 34 du moteur 3 se traduisant alors par une rotation de l'arbre principal 4.

Notamment dans un tel cas, d'autres moyens pourraient être utilisés pour limiter la poussée qu'applique à chaque pale 1 le piston 13 respectivement correspondant, en position de verrouillage, et pour limiter la rotation de la came 7 dans le sens du déverrouillage, et ces moyens pourraient avantageusement comporter le limiteur de couple 36 précité, ou encore des détections de positions de l'un quelconque des organes mis en mouvement lors du passage du piston 13 de la position de déverrouillage à la position de verrouillage et inversement, interrompant l'alimentation du moteur 3 lorsqu'une telle position limite est atteinte.

De façon générale, la présente invention est susceptible de nombreuses variantes par rapport aux exemples de mise en oeuvre qui ont été décrits, sans que l'on sorte pour autant du cadre de cette invention.

## Revendications

1. Dispositif de verrouillage des pales (1) du rotor principal (32) d'un hélicoptère (30) à l'encontre d'un battement, ledit rotor principal (32) présentant un axe (5) approximativement vertical de rotation et comportant :
- un moyeu (2) disposé suivant ledit axe de rotation (5), susceptible d'être entraîné ou immobilisé en rotation autour de celui-ci par rapport à la cellule (31) de l'hélicoptère (30), et constituant autant d'appuis (64), notamment dans un sens radial centrifuge (100), que de pales (1) du rotor principal (32), lesdits appuis (64) étant disposés selon une répartition angulaire déterminée autour dudit axe de rotation (5),
- lesdites pales (1), disposées approximativement radialement par rapport audit axe de rotation (5) et selon ladite répartition angulaire déterminée autour de celui-ci, chaque pale (1) comportant une zone extrême (62) chevauchant l'un, respectif, desdits appuis (64) et s'appuyant sur celui-ci, notamment dans le sens radial centrifuge (100) respectif, avec possibilité de battement, ladite zone extrême (62) présentant vers ledit axe de rotation (5), respectivement de part et d'autre de l'appui respectif (6) en référence à une direction axiale, des zones respectivement supérieure (75) et inférieure (74) de butée centripète,
- des contreparties respectivement supérieure (81) et inférieure (13) de butée centripète pour les zones respectivement supérieure (75) et inférieure (74) de butée centripète de chaque pale (1), respectivement, sur le moyeu (2), autorisant un battement limité de chaque pale (1) par rapport au moyeu (2), entre une orientation limite basse de la pale (1), que la pale (1) tend à occuper par gravité et dans laquelle la zone inférieure (74) de butée centripète est en appui centripète sur la contrepartie inférieure (12) de butée centripète, et une orientation limite haute, que la pale (1) tend à occuper par réaction à la sustentation et dans laquelle la zone supérieure (75) de butée centripète est en appui centripète sur la contrepartie supérieure (81) de butée centripète, alors que ladite zone extrême (62) de la pale s'appuie dans ledit sens radial centrifuge (100) sur l'appui (6) respectivement correspondant,
caractérisé en ce qu'il comporte :
- entre chaque zone supérieure (75) de butée, en référence à l'orientation limite basse, et l'axe de rotation (5), un organe de verrouillage respectif (13) monté mobile, par rapport au moyeu (2), entre une position de verrouillage comparativement éloignée de l'axe de rotation (5) et dans laquelle il s'appuie contre la zone supérieure (75) de butée alors que la pale (1) occupe son orientation limite basse, pour verrouiller la pale (1) dans cette orientation, et une position de déverrouillage comparativement rapprochée de l'axe de rotation (5) et dans laquelle il dégage suffisamment la zone supérieure (75) de butée pour autoriser un libre battement de la pale (1) entre son orientation limite basse et son orientation limite haute,
- une came unique (7) de commande simultanée de l'évolution des organes de verrouillage entre leurs positions respectivement de verrouillage et de déverrouillage, montée à la rotation autour dudit axe de rotation (5) par rapport au moyeu (2),
- des moyens (16, 17) de liaison cinématique entre la came (7) et chaque organe de verrouillage (13), de telle sorte que lorsque la came (7) occupe une position angulaire déterminée de verrouillage, autour dudit axe de rotation (5), par rapport au moyeu (2), tous les organes de verrouillage (13) occupent leur position de verrouillage et que, lorsque la came (7) occupe une position angulaire déterminée de déverrouillage, autour dudit axe de rotation (5), par rapport au moyeu (2), tous les organes de verrouillage (13) soient au moins libres de gagner leur position de déverrouillage,
- des moyens moteurs commandés (3, 4, 6, 36, 37) pour provoquer une rotation de la came (7) autour de l'axe de rotation (5), par rapport au moyeu (2), entre lesdites positions angulaires respectivement de verrouillage et de déverrouillage.

2. Dispositif selon la revendication 1, caractérisé en ce que les moyens moteurs commandés (3) comportent un moteur commandé (3) porté par le moyeu (2) et une chaîne (4, 6, 36, 37) de transmission cinématique entre le moteur (2) et la came (7), disposés suivant l'axe de rotation (5).

3. Dispositif selon la revendication 2, caractérisé en ce que la chaîne de transmission cinématique (4, 6, 36, 37) comporte un train épicycloïdal imbriqué.

4. Dispositif selon l'une quelconque des revendications 1 à 3, caractérisé en ce que les moyens (16, 17) de liaison cinématique entre la came (7) et chaque organe de verrouillage (13) comportent un organe de roulement respectif (16), monté à la rotation sur l'un d'entre eux autour d'un axe respectif (98) de roulement, parallèle audit axe de rotation (5), et une contrepartie (97) d'appui de cet organe de roulement (16) contre l'autre d'entre eux (13).

5. Dispositif selon la revendication 4, caractérisé en ce que chaque organe de roulement (16) est porté par la came (7).

6. Dispositif selon l'une quelconque des revendications 1 à 3, caractérisé en ce que les moyens (16, 17) de liaison cinématique entre la came (7) et chaque organe de verrouillage (13) comportent une biellette respective (17), articulée sur chacun d'entre eux.

7. Dispositif selon la revendication 6, caractérisé en ce que chaque biellette (17) est articulée sur la came (7) autour d'un axe respectif (20) d'articulation, parallèle audit axe de rotation (5), et raccordée par une rotule respective (18) à l'organe de verrouillage (13) correspondant.

8. Dispositif selon l'une quelconque des revendications 1 à 7, caractérisé en ce que chaque organe de verrouillage (13) est constitué par un piston (13) guidé à la translation par rapport au moyeu (2), suivant une direction déterminée (14) de translation, entre les positions respectivement de verrouillage et de déverrouillage.

9. Dispositif selon l'une quelconque des revendications 1 à 8, caractérisé en ce qu'il comporte des moyens (36, 86, 87, 93) pour limiter la poussée appliquée par chaque organe de verrouillage (13), en position de verrouillage, à la zone supérieure (75) de butée de la pale (1) respective, en orientation limite basse.

10. Dispositif selon les revendications 8 et 9 en combinaison, caractérisé en ce que les moyens (36, 86, 87, 93) pour limiter la poussée comportent des moyens de butée (86, 87, 93) de chaque piston (13) par rapport au moyeu (2), en position de verrouillage.

11. Dispositif selon l'une quelconque des revendications 9 et 10 en combinaison avec la revendication 2 au moins, caractérisé en ce que les moyens (36, 86, 87, 93) pour limiter la poussée comportent un limiteur de couple (86) intégré à ladite chaîne de transmission cinématique (4, 6, 36, 37).

12. Dispositif selon l'une quelconque des revendications 9 à 11, caractérisé en ce que les moyens (36, 86, 87, 93) pour limiter la poussée comportent un dispositif (17) à franchissement de point mort dans les moyens (16, 17) de liaison cinématique entre la came (7) et chaque organe de verrouillage (13).
